# EUROPÄISCHE PATENTSCHRIFT

(11) **EP 1 970 254 B1**
(45) Veröffentlichungstag und Bekanntmachung des Hinweises auf die Patenterteilung: **27.04.2011**
(21) Anmeldenummer: 07024141.9
(22) Anmeldetag: 12.12.2007
(51) Int. Cl.: B60R 11/00, F16B 13/00, F16B 19/00, F16B 21/08

(54) **Dübel zum Einsetzen in eine Öffnung einer Wand, insbesondere an einer Fahrzeugkarosserie**
Dowel for fitting in a wall opening, in particular in an automobile frame
Cheville destinée à être installée dans une ouverture de paroi, en particulier sur une carrosserie de véhicule

(30) Priorität: 12.03.2007 DE 202007003635 U
(43) Veröffentlichungstag der Anmeldung: 17.09.2008
(73) Patentinhaber: TRW Automotive Electronics & Components GmbH, 78315 Radolfzell (DE)
(72) Erfinder: Jatzke, Stefan, 67280 Ebertshiem (DE); Hofmann, Jürgen, 67304 Eisenberg (DE)
(74) Vertreter: Prinz & Partner

(56) Entgegenhaltungen:
- EP-A- 0 733 558
- DE-A1- 10 231 274

## Beschreibung

Die Erfindung betrifft einen Dübel zum Einsetzen in eine Öffnung einer Wand nach dem Oberbegriff des Anspruchs 1.

Ein gattungsgemäßer Dübel ist aus der DE 102 31 274 A1 bekannt. Dessen Dichtungsabschnitt ist als Ring ausgebildet und auf der der Wand zugewandten Unterseite des Flansches angeordnet. Der Dichtungsabschnitt ist aus einem Klebstoff, der durch Erwärmen in einen fließfähigen Zustand gebracht werden kann. Nach der Montage des Dübels durchläuft das mit dem Dübel versehene Bauteil eine Brennkammer, wodurch der Klebstoff aktiviert und der Dübel mit der Wand verklebt und dadurch abgedichtet wird.

Die Erfindung schafft einen Dübel, der sich durch eine besonders gute Abdichtung auszeichnet.

Erfindungsgemäß wird dies bei einem Dübel der eingangs genannten Art dadurch erreicht, daß am Schaftabschnitt mehrere als Federlaschen ausgebildete Rastelemente angeordnet sind und die Rastelemente den Dichtungsabschnitt zumindest teilweise randseitig überdecken. Der erfindungsgemäße ZweiKomponenten-Dübel, dessen erste Materialkomponente als Hartmaterial und dessen zweite Materialkomponente als Weichmaterial ausgebildet ist, wird insbesondere bereits vor einer Lackierung oder KTL-Beschichtung (KTL = kathodische Tauchlackierung) eines zugehörigen Fahrzeugkarosserieteils in die Öffnung eingesetzt. Bei den Temperaturen, die in der nach dem Lackieren bzw. Beschichten durchlaufenen Trocknungsanlage herrschen, expandiert die zweite Materialkomponente und sorgt so für eine zuverlässige Abdichtung der Öffnung. Ein zusätzliches Bauteil zur Abdichtung, etwa ein O-Ring oder eine angespritzte TPE-Dichtung (TPE = thermoplastisches Elastomer), ist nicht erforderlich. Gegenüber einem herkömmlichen Klebstoff bietet ein expandierendes Material den Vorteil, daß es eventuell vorhandene Spalte zwischen dem Dübel und der Öffnung beim Expandieren vollständig ausfüllt und dadurch die Öffnung wirklich dicht verschließt. Durch die Expansion des Materials lassen sich zudem Fertigungstoleranzen ausgleichen. Da die Rastelemente den Dichtungsabschnitt zumindest teilweise außenseitig überdecken, liegt der Dichtungsabschnitt radial innerhalb der Rastnasen, was den Vorteil bietet, daß nach der Expansion der zweiten Materialkomponente die Rastnasen in ihrer ausgestellten Stellung gleichsam verriegelt werden. Ein Herausziehen des Dübels entgegen der Einsetzrichtung ist dadurch wirkungsvoll verhindert.

Vorzugsweise ist der gesamte Dübel einteilig ausgestaltet. Insbesondere ist der Dichtungsabschnitt einteilig mit dem Schaftabschnitt ausgeführt. Gegenüber einem aus mehreren separaten Teilen bestehenden Dübel bietet dies den Vorteil der leichteren und schnelleren Handhabbarkeit. Der Dübel wird als Ganzes in einem einzigen Arbeitsschritt in die Öffnung der Wand eingesetzt.

Bevorzugt erfolgt durch das Kunststoffmaterial im expandierten Zustand eine Abdichtung der Innenkante der Öffnung sowie der dem Flansch abgewandten Seite der Wand, also der Innenseite der Wand bezüglich der Einsetzrichtung des Dübels. Dadurch wird eine besonders gute, flüssigkeitsdichte Abdichtung erreicht.

Außerdem kann vorgesehen sein, daß das Kunststoffmaterial im expandierten Zustand den Dübel mit der Wand verklebt. Durch diese zusätzliche Klebewirkung ist ein Einsatz des Dübels in Rundlöchern möglich, wobei ein Mitdrehen des Dübels bei der Befestigung beispielsweise eines Stoßfängers am Karosserieteil durch die Verklebung des Dübels am Blech der Wand verhindert wird.

In einer bevorzugten Ausführungsform umgibt der Dichtungsabschnitt den Schaftabschnitt unterhalb des Flansches, also zumindest teilweise im Bereich der Öffnung sowie auf der dem Flansch abgewandten Seite der Öffnung.

Um eine Befestigung beispielsweise eines Stoßfängers am Karosserieteil zu ermöglichen, weisen der Flansch und der Schaftabschnitt eine Bohrung für eine Schraube, insbesondere eine Kunststoffschraube, auf.

Der Schaftabschnitt kann zudem an seinem dem Flansch entgegengesetzten Ende eine Zentrierspitze aufweisen, die z.B. kegel-, kegelstumpf-, pyramiden- oder pyramidenstumpfartig ausgebildet ist und das Einsetzen des Dübels in die Öffnung erleichtert.

In einer bevorzugten Ausführungsform weist der Dübel zumindest im Bereich der Öffnung einen rechteckigen, insbesondere quadratischen Querschnitt auf und eignet sich daher besonders zum Einsetzen in eine Vierkantöffnung. Insbesondere bei geringen Schraubeneindrehmomenten ist jedoch, wie bereits erwähnt, auch eine Verwendung des Dübels in einem Rundloch möglich.

Am Schaftabschnitt können mehrere als Federlaschen ausgebildete Rastelemente angeordnet sein. Insbesondere sind zwei Rastelemente vorgesehen, die einander gegenüberliegen.

Die Rastelemente erstrecken sich bevorzugt in Richtung zum Flansch hin, d.h. ihre freien Enden zeigen zum Flansch. Im eingesetzten Zustand liegen diese freien Enden an der Unterseite der Wand an und dienen somit vor der Expansion der zweiten Materialkomponente zur Fixierung des Dübels in der Öffnung. Um ein Herausziehen des Dübels aus der Öffnung zu verhindern, sind die Rastelemente schräg nach außen ausgestellt, schließen also einen spitzen Winkel mit der Dübellängsachse ein.

Weitere Merkmale und Vorteile der Erfindung ergeben sich aus der nachfolgenden Beschreibung einer bevorzugten Ausführungsform anhand der beigefügten Zeichnung. In dieser zeigt:
- Figur 1 eine Perspektivansicht einer Wand mit einem eingesetzten erfindungsgemäßen Dübel, teilweise im Schnitt; und
- Figur 2 eine weitere Perspektivansicht der Wand mit eingesetztem Dübel aus Figur 1.

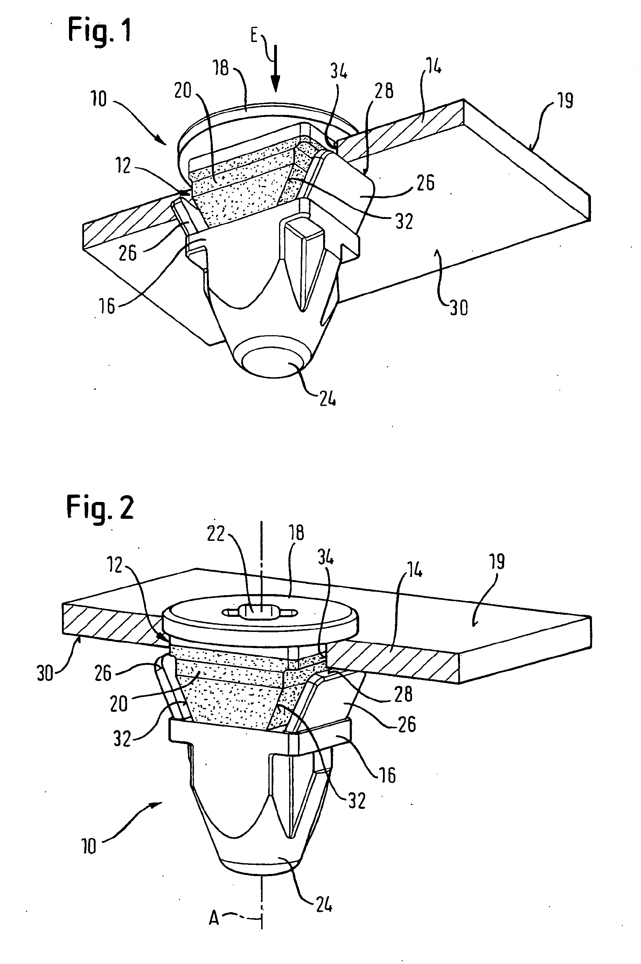

Die Figuren 1 und 2 zeigen einen einteiligen Dübel 10, der in eine Öffnung 12 einer Wand 14 eingesetzt ist, die ein Teil einer Fahrzeugkarosserie bildet. Der Dübel 10 dient hierbei zur flüssigkeitsdichten Befestigung beispielsweise eines Stoßfängers an dem Karosserieteil. Der Dübel 10 hat einen Schaftabschnitt 16, der die Öffnung 12 im eingesetzten Zustand durchragt und an den sich ein kreisrunder Flansch 18 anschließt, der bezüglich der Einsetzrichtung E des Dübels 10 auf der Außenseite 19 der Wand 14 angeordnet ist. Der Schaftabschnitt 16 und der Flansch 18 sind einstückig aus einer ersten Materialkomponente gefertigt, bei der es sich um ein Hartmaterial handelt. Der Dübel 10 hat im Bereich der Öffnung 12 einen quadratischen Querschnitt, der sich besonders zum Einsetzen in ein Vierkantloch eignet.

Nahezu unmittelbar unterhalb des Flansches 18 (bezüglich der Darstellung in den Figuren) ist ein Dichtungsabschnitt 20 angeordnet, der den Schaftabschnitt 16 auf einer bestimmten Höhe umfangsmäßig vollständig umgibt und zum Teil innerhalb der Öffnung 12, zum Teil unterhalb der Öffnung 12 liegt. Im Bereich des Dichtungsabschnitts 20 weist der Schaftabschnitt 16 gegenüber den angrenzenden Bereichen einen um die Dicke des Dichtungsabschnitts 20 verringerten Querschnitt auf. Der Dichtungsabschnitt 20, der einteilig mit dem Schaftabschnitt 16 ausgeführt ist, besteht aus einer zweiten Materialkomponente, nämlich einem bei erhöhter Temperatur expandierenden Kunststoffmaterial, das im expandierten Zustand die Öffnung 12 dicht verschließt. In den Figuren ist der nicht expandierte Zustand der als Weichmaterial ausgebildeten zweiten Materialkomponente gezeigt.

Der Flansch 18 und der Schaftabschnitt 16 weisen eine sich entlang der Dübellängsachse A erstreckende, mittige Bohrung 22 zur Aufnahme einer Schraube auf, mittels der beispielsweise ein Stoßfänger an der Wand 14 befestigt werden kann. An seinem dem Flansch 18 entgegengesetzten Ende hat der Schaftabschnitt 16 eine Zentrierspitze 24, die hier kegelstumpfförmig ausgebildet ist.

Etwa auf halber Höhe zwischen dem Flansch 18 und der Zentrierspitze 24 sind am Schaftabschnitt 16 mehrere (hier zwei) als Federlaschen ausgebildete Rastelemente 26 angeordnet, die sich in Richtung zum Flansch 18 hin schräg nach außen erstrecken. Die freien Enden 28 der einander gegenüberliegenden Rastelemente liegen im eingesetzten Zustand des Dübels 10 an der Innenseite 30 der Wand 14 an. Wie aus den Figuren ersichtlich, erstrecken sich die Rastelemente 26 über die gesamte Höhe des Teils des Dichtungsabschnitts 20, der aus der Öffnung 12 herausragt, was bedeutet, daß die Rastelemente 26 den Dichtungsabschnitt 20 auf zwei Seiten außenseitig größtenteils überdecken. Der in bezug auf die Rastelemente innenliegende Dichtungsabschnitt 20 weist zwei den Rastelementen 26 zugewandte schräge Außenflächen 32 auf.

Der Dübel 10 wird bereits vor einer Lackierung oder KTL-Beschichtung des durch die Wand 14 gebildeten Fahrzeugkarosserieteils in die Öffnung 12 eingesetzt und mittels der Rastelemente 26 verrastet. Nach dem Lackieren bzw. Beschichten durchläuft das Fahrzeugkarosserieteil eine Trocknungsanlage, wobei durch die in der Trocknungsanlage herrschenden Temperaturen die zweite Materialkomponente, die den Dichtungsabschnitt 20 bildet, expandiert und so eine Innenkante 34 der Öffnung 12 sowie die dem Flansch 18 abgewandte Innenseite 30 der Wand 14 abdichtet. Abhängig von der Wahl der zweiten Materialkomponente sind für die Expansion verschiedene Temperaturbereiche denkbar. Zusätzlich verklebt das Kunststoffmaterial des Dichtungsabschnitts 20 im expandierten Zustand den Dübel 10 mit der Wand 14. Durch die Expansion des Dichtungsabschnitts 20 werden außerdem die Rastelemente 26 "verriegelt" und somit an einer Schwenkbewegung gehindert. Auf diese Weise wird eine flüssigkeitsdichte Verbindung des Dübels 10 mit der Wand 14 erreicht. Anschließend kann z.B. ein Stoßfänger mit dem Dübel 10 verschraubt werden.

Aufgrund der bei der Expansion stattfindenden Verklebung ist, zumindest bei geringen Schraubeneindrehmomenten, auch ein Einsatz des Dübels 10 in Rundlöchern möglich.

## Patentansprüche

1. Dübel zum Einsetzen in eine Öffnung (12) einer Wand (14), insbesondere an einer Fahrzeugkarosserie, mit
einem die Öffnung (12) im eingesetzten Zustand durchragenden Schaftabschnitt (16) und einem daran anschließenden Flansch (18) aus einer ersten Materialkomponente sowie
einem Dichtungsabschnitt (20) aus einer zweiten Materialkomponente, wobei es sich bei der zweiten Materialkomponente um ein bei erhöhter Temperatur expandierendes Kunststoffmaterial handelt, das im expandierten Zustand die Öffnung (12) dicht verschließt,
**dadurch gekennzeichnet, dass** am Schaftabschnitt (16) mehrere als Federlaschen ausgebildete Rastelemente (26) angeordnet sind und die Rastelemente (26) den Dichtungsabschnitt (20) zumindest teilweise außenseitig überdecken.

2. Dübel nach Anspruch 1, **dadurch gekennzeichnet, daß** der Dichtungsabschnitt (20) einteilig mit dem Schaftabschnitt (16) ausgeführt ist.

3. Dübel nach Anspruch 1 oder 2, **dadurch gekennzeichnet, daß** durch das Kunststoffmaterial im expandierten Zustand eine Abdichtung der Innenkante (34) der Öffnung (12) sowie der dem Flansch (18) abgewandten Seite (30) der Wand (14) erfolgt.

4. Dübel nach einem der vorhergehenden Ansprüche, **dadurch gekennzeichnet, daß** das Kunststoffmaterial im expandierten Zustand den Dübel (10) mit der Wand (14) verklebt.

5. Dübel nach einem der vorhergehenden Ansprüche, **dadurch gekennzeichnet, daß** der Dichtungsabschnitt (20) den Schaftabschnitt (16) unterhalb des Flansches (18) umgibt.

6. Dübel nach einem der vorhergehenden Ansprüche, **dadurch gekennzeichnet, daß** der Flansch (18) und der Schaftabschnitt (16) eine Bohrung (22) für eine Schraube aufweisen.

7. Dübel nach einem der vorhergehenden Ansprüche, **dadurch gekennzeichnet, daß** der Schaftabschnitt (16) an seinem dem Flansch (18) entgegengesetzten Ende eine Zentrierspitze (24) aufweist.

8. Dübel nach einem der vorhergehenden Ansprüche, **dadurch gekennzeichnet, daß** er zumindest im Bereich der Öffnung (12) einen rechteckigen, insbesondere quadratischen Querschnitt aufweist.

9. Dübel nach einem der vorhergehenden Ansprüche, **dadurch gekennzeichnet, daß** sich die Rastelemente (26) in Richtung zum Flansch (18) hin erstrecken.

## Claims

1. A dowel for insertion into an opening (12) of a wall (14), in particular on a vehicle body, comprising
a shank section (16) which extends through the opening (12) in the inserted state and a flange (18) adjoined thereto and made from a first material component, and
a sealing section (20) made from a second material component, the second material component being a plastic material which expands at an elevated temperature and tightly closes the opening (12) in the expanded state,
**characterized in that** a plurality of latching elements (26) configured as spring lugs are disposed on the shank section (16) and the latching elements (26) at least partly cover the sealing section (20) on the outside.

2. The dowel according to claim 1, **characterized in that** the sealing section (20) is configured as a one-piece part with the shank section (16).

3. The dowel according to claim 1 or 2, **characterized in that** in the expanded state the plastic material seals the inner edge (34) of the opening (12) and the side (30) of the wall (14) facing away from the flange (18).

4. The dowel according to any of the preceding claims, **characterized in that** in the expanded state the plastic material adhesively bonds the dowel (10) to the wall (14).

5. The dowel according to any of the preceding claims, **characterized in that** the sealing section (20) surrounds the shank section (16) below the flange (18).

6. The dowel according to any of the preceding claims, **characterized in that** the flange (18) and the shank section (16) include a hole (22) for a screw.

7. The dowel according to any of the preceding claims, **characterized in that** the shank section (16) includes a center point (24) on its end lying opposite the flange (18).

8. The dowel according to any of the preceding claims, **characterized in that** at least in the region of the opening (12) it has a rectangular, in particular square cross section.

9. The dowel according to any of the preceding claims, **characterized in that** the latching elements (26) extend towards the flange (18).

## Revendications

1. Cheville destinée à être insérée dans une ouverture (12) d'une paroi (14), en particulier sur une carrosserie de véhicule, comportant un tronçon de fût (16) traversant l'ouverture (12) à l'état d'insertion et une collerette (18) s'y raccordant, en une première composante de matériau, ainsi que
un tronçon d'étanchéité (20) en une deuxième composante de matériau, la deuxième composante de matériau étant une matière plastique extensible à température élevée qui, à l'état d'extension, ferme l'ouverture (12) de façon étanche,
**caractérisée en ce que** sur le tronçon de fût (16) sont agencés plusieurs éléments d'enclenchement (26) réalisés sous forme de pattes élastiques et les éléments d'enclenchement (26) recouvrent le tronçon d'étanchéité (20) au moins partiellement sur la face extérieure.

2. Cheville selon la revendication 1, **caractérisée en ce que** le tronçon d'étanchéité (20) est réalisé d'un seul tenant avec le tronçon de fût (16).

3. Cheville selon la revendication 1 ou 2, **caractérisée en ce qu'**un étanchement de l'arête intérieure (34) de l'ouverture (12) ainsi que de la face de la paroi (14), qui est détournée de la collerette (18), est produite par la matière plastique à l'état d'extension.

4. Cheville selon l'une quelconque des revendications précédentes, **caractérisée en ce que** la matière plastique à l'état d'extension colle la cheville (10) avec la paroi (14).

5. Cheville selon l'une quelconque des revendications précédentes, **caractérisée en ce que** le tronçon d'étanchéité (20) entoure le tronçon de fût (16) au-dessous de la collerette (18).

6. Cheville selon l'une quelconque des revendications précédentes, **caractérisée en ce que** la collerette (18) et le tronçon de fût (16) présentent un perçage (22) pour une vis.

7. Cheville selon l'une quelconque des revendications précédentes, **caractérisée en ce que** le tronçon de fût (16) présente une pointe de centrage (24) à son extrémité opposée à la collerette (18).

8. Cheville selon l'une quelconque des revendications précédentes, **caractérisée en ce qu'**au moins dans la zone de l'ouverture (12), elle présente une section transversale rectangulaire, en particulier carrée.

9. Cheville selon l'une quelconque des revendications précédentes, **caractérisée en ce que** les éléments d'enclenchement (26) s'étendent en direction de la collerette (18).
